# EUROPÄISCHE PATENTSCHRIFT

(11) **EP 2 499 690 B1**
(45) Veröffentlichungstag und Bekanntmachung des Hinweises auf die Patenterteilung: **04.09.2013**
(21) Anmeldenummer: 10762635.0
(22) Anmeldetag: 23.09.2010
(51) Int. Cl.: H01M 6/50, H01M 10/48, H01M 10/50

(54) **TEMPERIERUNGSVERFAHREN UND BATTERIESYSTEM**
TEMPERATURE CONTROL METHOD AND BATTERY SYSTEM
PROCÉDÉ DE THERMORÉGULATION ET SYSTÈME DE BATTERIE

(30) Priorität: 10.11.2009 DE 102009046567
(43) Veröffentlichungstag der Anmeldung: 19.09.2012
(73) Patentinhaber: Samsung SDI Co., Ltd., Gyeonggi-do (KR); Robert Bosch GmbH, 70442 Stuttgart (DE)
(72) Erfinder: YAN, Xiaofeng, 71384 Weinstadt (DE); PANKIEWITZ, Christian, 70378 Stuttgart (DE); GUENON, Sylvain, 60490 Ressons Sur Matz (DE); SCHMIDT, Achim, 71706 Markgroeningen (DE)
(74) Vertreter: Bee, Joachim
(86) Internationale Anmeldenummer: PCT/EP2010/064022
(87) Internationale Veröffentlichungsnummer: WO 2011/057853

(56) Entgegenhaltungen:
- EP-A1- 1 302 998
- WO-A1-2007/102756
- US-A1- 2003 184 256

## Beschreibung

Die Erfindung betrifft ein Temperierungsverfahren und ein Batteriesystem, womit ein optimaler Temperaturbereich zum Betreiben einer Batterie erzeugt werden kann.

Es ist bekannt mittels eines Batteriemanagementsystems die Leistungsabgabe und Leistungsaufnahme in einer Weise zu regeln, dass die Batterie in einem bestimmten Temperaturbereich arbeitet. Damit kann allerdings nicht das gesamte Leistungspotential der Batterie ausgeschöpft werden.

Es ist auch bekannt Kühlmedien, wie Luft, Kühlwasser oder Kältemittel einzusetzen, die der Batterie Wärme entziehen und nach außen abgeben. Damit ist zwar eine höhere Leistungsausbeute möglich, jedoch ist es mit einer Kühlung nur möglich die Temperaturen nach oben zu beschränken. Gerade für die automobile Anwendung ist es wichtig, Batterien, wie Lithium-lon Batterien, nicht nur vor einer Überhitzung, sondern auch vor einer Unterkühlung zu schützen. Eine Unterkühlung verringert die Leistungsabgabe einer Lithium-lon Batterie erheblich. Wird ein Fahrzeug mit dieser Batterie bei kalten Temperaturen abgestellt, kann die Batterie soweit abkühlen, dass die höchstmögliche Leistungsabgabe der Batterie zu gering für einen Gebrauch ist.

Auch Mittel zum Aufheizen einer Batterie sind bekannt. So können in Batteriesysteme integrierte Latentwärmespeicher Wärmeenergie bei einer Phasenumwandlung eines Speichermediums speichern und diese bei einer Rückumwandlung wieder freigeben. Diese Methode ist aber nur in einem begrenzten Temperaturbereich einsetzbar, zudem lässt sich die Rückumwandlung nicht zeitlich steuern. Sie findet abhängig von der Umgebungstemperatur selbstständig statt.

Aus der WO 2007/102756 A1 ist ein Temperaturregler für die Bereitstellung von Wärme an eine Energiespeichervorrichtung eines Leistungsreglers bekannt. Die Energiespeichervorrichtung weist eine Vielzahl von Hochtemperatur-Batterieeinheiten mit hohem Potential auf. Der Temperaturregler umfasst ein Rohrnetz zur Behausung eines Wärmeträgermediums, wobei das Rohrnetz eine Hauptrohr-Schleife und eine lokale Rohrschleife in jeder einzelnen Batterieeinheit aufweist. Dabei weist jede lokale Rohrschleife ein erstes Ende zur Aufnahme eines Wärmeträgermediums und ein zweites Ende zum Absaugen des Mediums auf.

Der Erfindung liegt daher die Aufgabe zugrunde, ein Verfahren und eine Vorrichtung bereitzustellen, womit eine Batterie vor einem Kaltstart energiesparend erhitzt werden kann.

Gelöst wird diese Aufgabe mit einem Temperierungsverfahren mit den in Anspruch 1 genannten Merkmalen, einem Batteriesystem nach Anspruch 5 und einem Fahrzeug nach Anspruch 10.

In dem erfindungsgemäßen Temperierungsverfahren zur Temperierung einer Batterie werden Batteriezellen der Batterie in mehrere separate, in einem Temperierungskreislauf integrierte Module angeordnet, wobei in einer Aufheizphase eine Aufheizung schrittweise erfolgt, indem in einem ersten Schritt lediglich ein erstes Modul mittels eines in dem Temperierungskreislauf wirkenden und mittels eines Heizelements erhitzten Temperierungsmediums aufgeheizt wird und in wenigstens einem weiteren Schritt durch im Betrieb wenigstens des ersten Moduls entstehende Wärme für eine Aufheizung wenigstens eines weiteren Moduls genutzt wird.

Hiermit wird vorteilhaft die durch den Betrieb der Module entstehende Wärme mit zur Aufheizung weitere Module verwendet. Dadurch wird die Aufheizung insgesamt sehr energiesparend durchgeführt. Mit dem erfindungsgemäßen Verfahren wird zudem ein Kaltstart der Batterie in einer für die Batterie vorteilhaften, schonenderen Weise durchgeführt, da anfangs nur die bereits auf eine bestimmte Temperatur erwärmten Module in Betrieb genommen werden.

In bevorzugter Ausgestaltung der Erfindung ist vorgesehen, dass das Temperierungsmedium von einer Pumpe befördert wird. Hiermit wird vorteilhaft der Volumenstrom des Temperierungsmediums an die Erfordernisse angepasst.

In weiterer bevorzugter Ausgestaltung der Erfindung ist vorgesehen, dass die Module der Batterie mittels Einstellen von Stellventilen separat in den Temperierungskreislauf integriert werden. Hiermit werden die Module vorteilhaft separat mit dem Temperierungsmedium versorgt. Je nach Bedarf des einzelnen Moduls wird diesem ein entsprechender Anteil des Volumenstroms des Temperierungsmediums zugeteilt.

In weiterer bevorzugter Ausgestaltung der Erfindung ist vorgesehen, dass das Aufheizverfahren von einem Batteriemanagementsystem geregelt wird, wobei das Batteriemanagementsystem wenigstens eine Temperatur an der Batterie, eine Leistungsaufnahme und Leistungsabgabe an der Batterie, eine Temperatur des Temperierungsmediums und einen Volumenstrom des Temperierungsmediums als Parameter ermittelt und das Batteriemanagementsystem die Pumpe, das Heizelement, und die Stellventile unter Berücksichtigung der ermittelten Parameter stellt. Hiermit wird der optimale Temperaturbereich der Batterie vorteilhaft automatisch erzeugt. Durch die Regelung des Batteriemanagementsystems kann die Aufheizung sehr energiesparend erfolgen.

Weiterhin wird die Aufgabe durch ein Batteriesystem mit den in Anspruch 5 genannten Merkmalen gelöst.

Das erfindungsgemäße Batteriesystem umfasst ein Batteriemanagementsystem, eine Batterie mit in wenigstens zwei Module angeordnete Batteriezellen, einem Temperierungskreislauf mit einem Temperierungsmedium, einem Heizelement, einer Pumpe und Stellventilen, wobei das Batteriemanagementsystem eine Temperaturerfassung der Module, eine Temperaturerfassung des Temperierungsmediums und eine Volumenstromerfassung des Temperierungsmediums umfasst und das Heizelement, die Pumpe und die Stellventile vom Batteriemanagementsystem in der Weise stellbar sind, dass in einer Aufheizphase eine Aufheizung schrittweise auslösbar ist, indem in einem ersten Schritt lediglich ein erstes Modul mittels des in dem Temperierungskreislauf wirkenden und mittels des Heizelements erhitzten Temperierungsmediums aufheizbar ist und in wenigstens einem weiteren Schritt durch im Betrieb wenigstens des ersten Moduls entstehende Wärme für eine Aufheizung wenigstens eines der weiteren Module nutzbar ist.

Hiermit ist es vorteilhaft ermöglicht, dass die einzelnen Module stufenweise aufgeheizt werden können und dass die im Betrieb der Module produzierte Wärme zur Aufheizung der anderen Module verwendet werden kann. Eine Aufheizung der gesamten Batterie ist somit energetisch viel günstiger möglich. Die Batterie kann damit immer in einem optimalen Temperaturbereich betrieben werden. Das führt vorteilhaft zu einer längeren Lebensdauer und einer höheren Betriebssicherheit der Batterie.

In bevorzugter Ausgestaltung der Erfindung ist vorgesehen, dass ein Modul eine kleiner als die anderen Module dimensionierte Starteinheit ist. Hiermit ist es vorteilhaft ermöglicht, dass für eine Aufheizung bei einem Kaltstart weniger Energie benötigt wird, da es weniger Energie bedarf, ein kleineres Modul aufzuheizen, als ein großes.

In weiterer bevorzugter Ausgestaltung umfasst die Starteinheit weniger als 80 % insbesondere weniger als 50 % der Masse und/oder des Volumens und/oder der Anzahl der Batteriezellen, als das nächst größere Modul.

In weiterer bevorzugter Ausgestaltung der Erfindung ist vorgesehen, dass der Temperierungskreislauf einen Wärmetauscher aufweist. Hiermit ist es vorteilhaft ermöglicht, dass das Temperierungsmedium Wärmeenergie an die Umgebung abgeben kann und so zusätzlich zur Kühlung der Batterie verwendbar ist.

In weiterer bevorzugter Ausgestaltung der Erfindung ist vorgesehen, dass das Batteriesystem einen Bypass um den Wärmetauscher und ein Mischventil aufweist. Damit ist es vorteilhaft ermöglicht das Temperierungsmedium in der Aufheizphase direkt zum Ausgleichsbehälter mit dem Heizelement zu leiten. Das Temperierungsmedium gibt so nicht unnötig Wärme an den Wärmetauscher und die Zuleitung zum Wärmetauscher ab. Die Aufheizphase kann somit energetisch vorteilhafter durchlaufen werden.

In weiterer bevorzugter Ausgestaltung der Erfindung ist vorgesehen, dass die Batterie eine Lithium-lon-Batterie ist. Lithium- Ionen Zellen bieten vorteilhaft eine bessere Leistung gegenüber anderen Zelltypen. Sie besitzen eine bessere gewichts- und massespezifische Kapazität und eine längere Lebensdauer.

Das erfindungsgemäße Batteriesystem wird vorzugsweise in allen genannten Ausgestaltungen in ein Fahrzeug implementiert.

Weiterhin wird die Aufgabe durch ein Fahrzeug mit den in Anspruch 10 genannten Merkmalen gelöst.

Das erfindungsgemäße Fahrzeug umfasst dabei ein Batteriesystem der oben genannten Art.

Hiermit ist es vorteilhaft ermöglicht, das Fahrzeug auch bei niedrigen Außentemperaturen in Betrieb zu nehmen, auch ohne die Batterie dadurch nachteilig zu belasten. Der Batterie kann somit auch bei winterlichen Temperaturen Leistung entnommen oder zugeführt werden. Mit dem Batteriesystem ist bei der Fahrzeugbatterie eine hohe Betriebssicherheit gewährleistet.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
Figur 1: eine Anordnung eines erfindungsgemäßen Batteriesystems und
Figur 2: eine weitere Anordnung eines erfindungsgemäßen Batteriesystems.

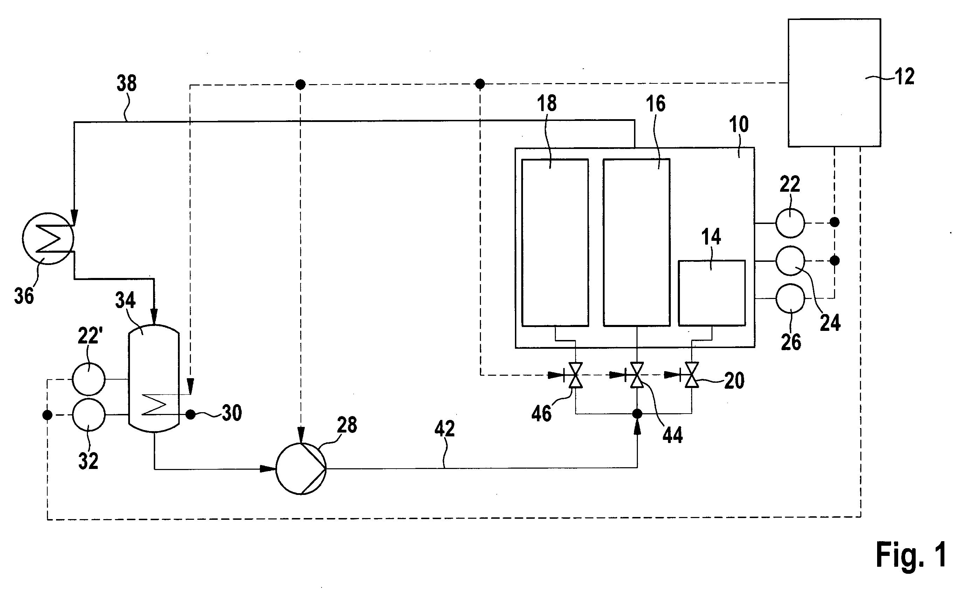

Die Temperatur hat einen großen Einfluss auf die Leistungsbereitstellung , Alterung und Betriebssicherheit der Batterie. In Figur 1 ist ein erfindungsgemäßes Batteriesystem mit einer Anordnung zur Temperierung einer Batterie 10 dargestellt. Damit wird die Batterie 10 sowohl vor einer Überhitzung, als auch vor einer Unterkühlung geschützt. Das erfindungsgemäße Batteriesystem erzeugt einen optimalen Temperaturbereich zum Betreiben der Batterie 10. So wird die durch den Betrieb erhitzte Batterie 10 gekühlt und eine Batterie von der Umgebung der abgekühlten Batterie 10 erwärmt, wenn die Temperaturen aus dem optimalen Bereich zu geraten drohen.

Das erfindungsgemäße Batteriesystem weist optimierte Kaltstarteigenschaften auf, wobei ein Kaltstart eine Aufnahme des Betriebes mit einer Umgebungstemperatur unterhalb des optimalen Temperaturbereichs darstellt.

Batteriezellen der Batterie 10 sind dabei in mehrere Module 14, 16 und 18 angeordnet, von denen das erste Modul 14 eine Starteinheit bildet. Im Unterschied zu den übrigen Modulen 16,18 ist die Starteinheit speziellen Anforderungen eines Kaltstarts angepasst. Die Starteinheit kann sich daher in Größe, Gewicht und/oder in der Anzahl der Batteriezellen zu den anderen Modulen unterscheiden. In Figur 1 ist die Starteinheit kleiner ausgeführt. Dadurch lässt sie sich bei gleicher Heizleistung schneller beziehungsweise mit weniger Heizleistung in gleicher Zeit erwärmen, als die anderen Module 16,18

Zur Temperierung sind die Module 14,16,18 in einen Temperierungskreislauf integriert. Ein in dem Temperierungskreislauf enthaltenes Temperierungsmedium kühlt oder wärmt die Module 14,16,18, je nach aktuellem Zustand der Module. Der Temperierungskreislauf umfasst eine Einlassrohrleitung 42, eine Auslassrohrleitung 38, einen Wärmetauscher 36, einen Ausgleichsbehälter 34 mit einem vorzugsweise integrierten Heizelement 30 eine Pumpe 28 und Stellventile 20,44,46. Das Heizelement kann auch außerhalb des Temperierungskreises positioniert werden. Geregelt wird die Temperierung mittels eines Batteriemanagementsystems 12. Es erfasst wenigstens eine Temperatur 22 an der Batterie 10, eine Spannung 24 und Stromstärke 26 und damit eine Leistungsaufnahme und Leistungsabgabe der Batterie 10, eine Temperatur 22' des Temperierungsmediums im Ausgleichsbehälter 34 und einen Volumenstrom 32 des Temperierungsmediums und gleicht diese mit vorgegebenen Sollwerten ab. Zur Regelung stellt das Batteriemanagementsystem entsprechend die Pumpe 28, das Heizelement 30, und die Stellventile 20,44,46.

Beim einem Kaltstart begibt sich das Batteriesystem in eine Aufheizphase. Dabei wird das Temperierungsmedium mittels des Heizelements 30 im Ausgleichsbehälter 34 erwärmt. Die Pumpe 28 fördert das erwärmte Temperierungsmedium durch die Einlassrohrleitung 42 zu den Stellventilen 20,44,46. Zunächst ist nur das Stellventil 20 für das erste Modul 14, also für die Starteinheit geöffnet und die anderen Ventile 44,46 sind geschlossen. Das erwärmte Temperierungsmedium gibt seine Wärme an die Starteinheit 14 hab und wird über die Auslassrohrleitung 38 wieder zurück in den Ausgleichsbehälter geleitet. Dieser Vorgang wird so lange fortgesetzt, bis die Starteinheit 14 eine optimale Temperatur erreicht hat. Ab einer gewissen betriebsbereiten Temperatur kann die Starteinheit 14 den Betrieb aufnehmen. Diese betriebsbereite Temperatur kann unterhalb der optimalen Temperatur liegen.

Im Betrieb, also bei einem Laden oder Entladen, produziert die Starteinheit 14 Wärme durch Ohmschen Wärmeverlust aufgrund des Batterie-Innenwiderstands. Diese Wärme wird zusätzlich oder ausschließlich genutzt, um die optimale Temperatur der Starteinheit 14 zu erreichen. Weist die Starteinheit 14 die optimale Temperatur auf, wird die Starteinheit 14 nicht weiter durch das Temperierungsmedium aufgeheizt. Weist die Starteinheit 14 eine Temperatur oberhalb der optimalen Temperatur auf, gibt die Starteinheit 14 Wärme an das Temperierungsmedium ab.

Ab einer bestimmten Temperatur der Starteinheit 14, im Bereich oberhalb der betriebsbereiten Temperatur, einschließlich der betriebsbereiten Temperatur, wird wenigstens ein weiteres Modul 16,18 in den Temperierungskreislauf integriert. Dazu wird das entsprechende Stellventil 44,46 geöffnet. Das Temperierungsmedium nimmt nun Wärme durch das Heizelement und/oder durch die im Betrieb produzierte Wärme der Starteinheit 14 auf und gibt diese an das dazugeschaltete Modul ab. Das Heizelement 30 wird dabei nur nach Bedarf betrieben. Hat auch das dazugeschaltete Modul 16,18 eine bestimmte Temperatur erreicht, wird das nächste, oder werden die nächsten Module dazugeschaltet. Am energiesparsamsten ist es, wenn das oder die dazugeschalteten Module ausschließlich von der im Betrieb produzierten Wärme anderer Module aufgeheizt werden.

Alle Module 14,16,18 der Batterie 10 können einzeln durch Stellen der Stellventile 20,44,46 mittels des Temperierungsmediums aufgeheizt werden. Das Temperierungsmedium erhält seine Wärmeenergie dabei indem es durch das Heizelement 30 aufgeheizt wird und/oder indem es Wärme anderer durch den Betrieb erhitzter Module 14,16,18 aufnimmt.

Erreichen die Module 14,16,18 der Batterie 10 eine bestimmte Temperatur oberhalb der optimalen Temperatur, schaltet das Batteriesystem in eine Abkühlphase. Die Module 14,16,18 geben ihre im Betrieb produzierte und nun überschüssige Wärme an das Temperierungsmedium ab. Das Temperierungsmedium, mittels der Pumpe 28 weiter befördert zum Wärmetauscher, gibt die Wärme im Wärmetauscher 36 an die Umgebung ab. Das Heizelement 30 ist während der Abkühlphase nicht im Betrieb.

Alle Module 14,16,18 der Batterie 10 können einzeln durch Stellen der Stellventile 20,44,46 mittels des Temperierungsmediums abgekühlt werden werden. Das Temperierungsmedium erhält seine Kühle dabei indem es durch den Wärmetauscher 36 und/oder kalte Module 14,16,18 abgekühlt wird.

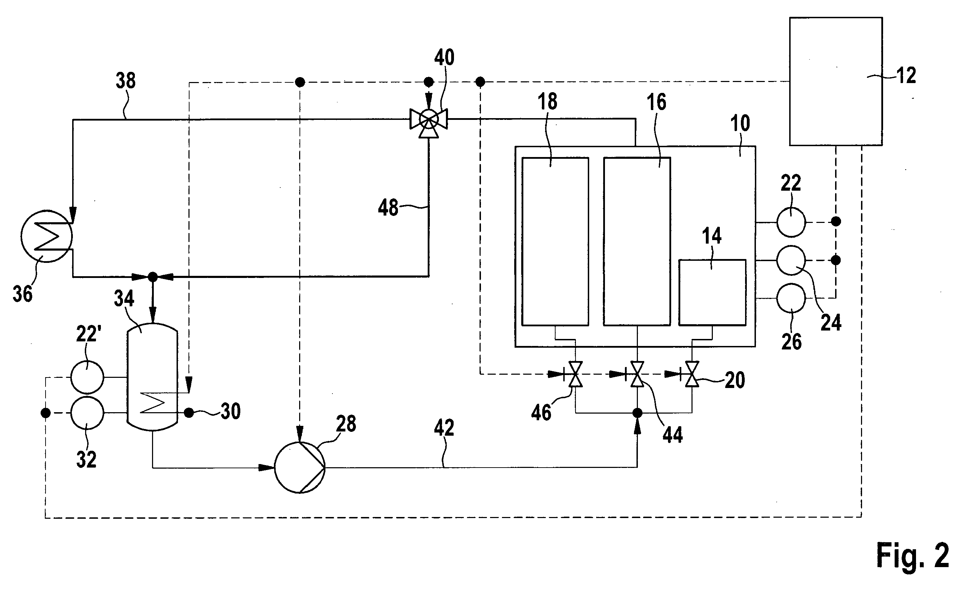

In Figur 2 ist eine weitere Ausführung des erfindungsgemäßen Batteriesystems dargestellt. Zusätzlich zu der in Figur 1 gezeigten Variante weist dieses Batteriesystem im Temperierungskreislauf einen Bypass 48 auf. Der Bypass 48 umgeht den Wärmetauscher 36. Damit kann das Temperierungsmedium in der Aufheizphase direkt zum Ausgleichsbehälter 34 mit dem Heizelement 30 geleitet werden. Das Temperierungsmedium gibt so nicht unnötig Wärme an den Wärmetauscher 36 und die Zuleitung zum Wärmetauscher ab. Die Aufheizphase kann somit energetisch vorteilhafter durchlaufen werden. Gelenkt wird der Temperierungsmediumstrom von einem Mischventil 40. Dies kann beispielsweise ein Thermostat sein, mit einer voreingestellten Temperatur, ab welcher das Temperierungsmedium über den Wärmetauscher 36 geleitet werden soll, oder das Mischventil 40 wird über das Batteriemanagementsystem 12 gestellt.

## Patentansprüche

1. Temperierungsverfahren zur Temperierung einer Batterie (10), wobei Batteriezellen der Batterie in mehrere separate, in einem Temperierungskreislauf integrierte Module (14,16,18) angeordnet werden, **dadurch gekennzeichnet, dass** in einer Aufheizphase eine Aufheizung schrittweise erfolgt, indem in einem ersten Schritt lediglich ein erstes Modul (14) mittels eines in dem Temperierungskreislauf wirkenden und mittels eines Heizelements (30) erhitzten Temperierungsmediums aufgeheizt wird und in wenigstens einem weiteren Schritt durch im Betrieb wenigstens des ersten Moduls (14) entstehende Wärme für eine Aufheizung wenigstens eines weiteren Moduls (16,18) genutzt wird.

2. Temperierungsverfahren nach Anspruch 1, **dadurch gekennzeichnet, dass** das Temperierungsmedium von einer Pumpe (28) befördert wird.

3. Temperierungsverfahren nach Anspruch 1 oder 2, **dadurch gekennzeichnet, dass** die Module (14,16,18) der Batterie mittels Einstellen von Stellventilen (20,44,46) separat in den Temperierungskreislauf integriert werden.

4. Temperierungsverfahren nach Anspruch 3, **dadurch gekennzeichnet, dass** das Aufheizverfahren von einem Batteriemanagementsystem (12) geregelt wird, wobei das Batteriemanagementsystem (12) wenigstens eine Temperatur an der Batterie (10), eine Leistungsaufnahme und Leistungsabgabe an der Batterie (10), eine Temperatur des Temperierungsmediums und einen Volumenstrom des Temperierungsmediums als Parameter ermittelt und das Batteriemanagementsystem (12) die Pumpe (28), das Heizelement (30), und die Stellventile (20,44,46) unter Berücksichtigung der ermittelten Parameter stellt.

5. Batteriesystem mit einem Batteriemanagementsystem (12), einer Batterie (10) mit in wenigstens zwei Module (14,16,18) angeordneten Batteriezellen, einem Temperierungskreislauf mit einem Temperierungsmedium, einem Heizelement (30), einer Pumpe (28) und Stellventilen (20,44,46), wobei das Batteriemanagementsystem (12) eine Temperaturerfassung (22) der Module (14,16,18), eine Temperaturerfassung (22') des Temperierungsmediums und eine Volumenstromerfassung (32) des Temperierungsmediums umfasst und das Heizelement (30), **dadurch gekennzeichnet, dass** die Pumpe (28) und die Stellventile (20,44,46) vom Batteriemanagementsystem (12) in der Weise stellbar sind, dass in einer Aufheizphase eine Aufheizung schrittweise auslösbar ist, indem in einem ersten Schritt lediglich ein erstes Modul (14) mittels des in dem Temperierungskreislauf wirkenden und mittels des Heizelements (30) erhitzten Temperierungsmediums aufheizbar ist und in wenigstens einem weiteren Schritt durch im Betrieb wenigstens des ersten Moduls (14) entstehende Wärme für eine Aufheizung wenigstens eines der weiteren Module (16,18) nutzbar ist.

6. Batteriesystem nach Anspruch 5, **dadurch gekennzeichnet, dass** ein Modul eine kleiner als die anderen Module dimensionierte Starteinheit (14) ist.

7. Batteriesystem nach Anspruch 5 oder 6, **dadurch gekennzeichnet, dass** der Temperierungskreislauf einen Wärmetauscher (36) aufweist.

8. Batteriesystem nach Anspruch 7, **dadurch gekennzeichnet, dass** das Batteriesystem einen Bypass (48) um den Wärmetauscher (36) und ein Mischventil (40) aufweist.

9. Batteriesystem nach einem der Ansprüche 5 bis 8, **dadurch gekennzeichnet, dass** die Batterie (10) eine Lithium-lon-Batterie ist.

10. Fahrzeug mit einem Batteriesystem nach einem der Ansprüche 5 bis 9.

## Claims

1. Temperature-control method for temperature-controlling a battery (10), wherein battery cells of the battery are arranged in a plurality of separate modules (14, 16, 18) integrated in a temperature-control circuit, **characterized in that** heating takes place in a stepwise manner in a heating phase, **in that** in a first step only a first module (14) is heated by means of a temperature-control medium that acts in the temperature-control circuit and is heated by means of a heating element (30), and in at least one further step heat produced during operation at least of the first module (14) is used for heating at least one further module (16, 18).

2. Temperature-control method according to Claim 1, **characterized in that** the temperature-control medium is transported by a pump (28).

3. Temperature-control method according to Claim 1 or 2, **characterized in that** the modules (14, 16, 18) of the battery are integrated separately into the temperature-control circuit by means of the setting of control valves (20, 44, 46).

4. Temperature-control method according to Claim 3, **characterized in that** the heating method is regulated by a battery management system (12), wherein the battery management system (12) determines at least one temperature at the battery (10), power consumption and power output at the battery (10), a temperature of the temperature-control medium and a volumetric flow of the temperature-control medium as parameters and the battery management system (12) adjusts the pump (28), the heating element (30) and the control valves (20, 44, 46) taking the parameters determined into consideration.

5. Battery system having a battery management system (12), a battery (10) having battery cells arranged in at least two modules (14, 16, 18), a temperature-control circuit having a temperature-control medium, a heating element (30), a pump (28) and control valves (20, 44, 46), wherein the battery management system (12) comprises detection of the temperature (22) of the modules (14, 16, 18), detection of the temperature (22') of the temperature-control medium and detection of the volumetric flow (32) of the temperature-control medium, and the heating element (30), **characterized in that** the pump (28) and the control valves (20, 44, 46) are adjustable by the battery management system (12) such that heating is triggerable in a stepwise manner in a heating phase, **in that** in a first step only a first module (14) is heatable by means of the temperature-control medium that acts in the temperature-control circuit and is heated by means of the heating element (30), and in at least one further step heat produced during operation at least of the first module (14) is usable for heating at least one of the further modules (16, 18).

6. Battery system according to Claim 5, **characterized in that** one module is a starting unit (14) having smaller dimensions than the other modules.

7. Battery system according to Claim 5 or 6, **characterized in that** the temperature-control circuit has a heat exchanger (36).

8. Battery system according to Claim 7, **characterized in that** the battery system has a bypass (48) around the heat exchanger (36) and a mixing valve (40).

9. Battery system according to one of Claims 5 to 8, **characterized in that** the battery (10) is a lithium-ion battery.

10. Vehicle having a battery system according to one of Claims 5 to 9.

## Revendications

1. Procédé de thermorégulation pour la thermorégulation d'une batterie (10), dans lequel des cellules de batterie de la batterie sont disposées en plusieurs modules séparés (14, 16, 18) intégrés dans un circuit de thermorégulation, **caractérisé en ce que** dans une phase de chauffage se produit un chauffage par étapes, dans lequel, dans une première étape, seulement un premier module (14) est chauffé au moyen d'un milieu de thermorégulation agissant dans le circuit de thermorégulation et chauffé au moyen d'un élément chauffant (30) et est utilisé dans au moins une étape supplémentaire, pour chauffer au moins un module supplémentaire (16, 18) par la chaleur produite pendant le fonctionnement d'au moins le premier module (14).

2. Procédé de thermorégulation selon la revendication 1, **caractérisé en ce que** le milieu de thermorégulation est refoulé par une pompe (28).

3. Procédé de thermorégulation selon la revendication 1 ou 2, **caractérisé en ce que** les modules (14, 16, 18) de la batterie sont intégrés séparément dans le circuit de thermorégulation au moyen d'un ajustement par des soupapes de commande (20, 44, 46).

4. Procédé de thermorégulation selon la revendication 3, **caractérisé en ce que** le procédé de chauffage est régulé par un système de gestion de batterie (12), le système de gestion de batterie (12) déterminant, en tant que paramètres, au moins une température au niveau de la batterie (10), une absorption d'énergie et une émission d'énergie au niveau de la batterie (10), une température du milieu de thermorégulation et un débit volumique du milieu de thermorégulation, et le système de gestion de batterie (12) réglant la pompe (28), l'élément chauffant (30), et les soupapes de commande (20, 44, 46) en tenant compte des paramètres déterminés.

5. Système de batterie comprenant un système de gestion de batterie (12), une batterie (10) avec des cellules de batterie disposées dans au moins deux modules (14, 16, 18), un circuit de thermorégulation avec un milieu de thermorégulation, un élément chauffant (30), une pompe (28) et des soupapes de commande (20, 44, 46), le système de gestion de batterie (12) comprenant une détection de la température (22) des modules (14, 16, 18), une détection de la température (22') du milieu de thermorégulation et une détection du débit volumique (32) du milieu de thermorégulation et l'élément chauffant (30), **caractérisé en ce que** la pompe (28) et les soupapes de commande (20, 44, 46) peuvent être réglées par le système de gestion de batterie (12) de telle sorte que dans une phase de chauffage, un chauffage puisse être déclenché par étapes, où, dans une première étape, seulement un premier module (14) peut être chauffé au moyen du milieu de thermorégulation agissant dans le circuit de thermorégulation et chauffé au moyen de l'élément chauffant (30) et, dans au moins une étape supplémentaire, peut être utilisé pour un chauffage d'au moins l'un des autres modules (16, 18) par la chaleur produite pendant le fonctionnement d'au moins le premier module (14).

6. Système de batterie selon la revendication 5, **caractérisé en ce qu'**un module est une unité de démarrage (14) de dimensions plus petites que les autres modules.

7. Système de batterie selon la revendication 5 ou 6, **caractérisé en ce que** le circuit de thermorégulation présente un échangeur de chaleur (36).

8. Système de batterie selon la revendication 7, **caractérisé en ce que** le système de batterie présente une dérivation (48) autour de l'échangeur de chaleur (36) et une soupape de mélange (40).

9. Système de batterie selon l'une quelconque des revendications 5 à 8, **caractérisé en ce que** la batterie (10) est une batterie lithium-ion.

10. Véhicule comprenant un système de batterie selon l'une quelconque des revendications 5 à 9.
